(19) Europäisches Patentamt
European Patent Office
Office européen des brevets

(11) Veröffentlichungsnummer: **0 014 850**
**B1**

(12) **EUROPÄISCHE PATENTSCHRIFT**

(45) Veröffentlichungstag der Patentschrift: **31.10.84**

(51) Int. Cl.³: **G 06 F 9/22**, G 06 F 15/06

(21) Anmeldenummer: **80100323.7**

(22) Anmeldetag: **23.01.80**

(54) **Einrichtung zur Erweiterung des Standard-Makroinstruktionssatzes in einer Datenverarbeitungsanlage.**

(30) Priorität: **26.02.79 US 15505**

(43) Veröffentlichungstag der Anmeldung: **03.09.80 Patentblatt 80/18**

(45) Bekanntmachung des Hinweises auf die Patenterteilung: **31.10.84 Patentblatt 84/44**

(84) Benannte Vertragsstaaten: **BE CH DE FR GB NL SE**

(56) Entgegenhaltungen: **US - A - 3 681 761**

(73) Patentinhaber: **International Business Machines Corporation, Old Orchard Road, Armonk, N.Y. 10504 (US)**

(72) Erfinder: **Logue, Joseph Carl, 52 Boardman Road, Poughkeepsie, N.Y. 12603 (US)**
Erfinder: **Wu, Wei-Wha, 48 Scenic Drive, Poughkeepsie, N.Y. 12603 (US)**

(74) Vertreter: **Jost, Ottokarl, Dipl.-Ing., Schönaicher Strasse 220, D-7030 Böblingen (DE)**

EP 0 014 850 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Einrichtung zur Erweiterung des Standard-Makroinstruktionssatzes in einer Datenverarbeitungsanlage nach dem Oberbegriff des Anspruchs 1.

Im Zusammenhang mit elektronischen Datenverarbeitungsanlagen spielen programmierbare Logikanordnungen, kurz PLAs genannt, bei der Ausführung von Instruktionen, eine Rolle. Aus der US-A-3 949 370 beispielsweise ist es bekannt, PLAs als Mikroinstruktionsspeicher und/oder als Adressierungseinheit für den Aufruf von Mikroinstruktionen, entsprechend dem Operationscode einer bestimmten Makroinstruktion zu verwenden.

Aus US-A-3 962 683 sowie aus US-A-4 074 351 ist die Verwendung von PLAs im Steuerteil von Prozessoren bekannt, wobei diese an verschiedene Bedürfnisse angepaßt werden können. Eine Anpassung wird hier durch Änderung der Torschaltungsmaske der PLAs vorgenommen. Die bei den Gegenständen dieser Patentschriften verwendeten PLAs sind in zwei hierarchischen Ebenen angeordnet, wobei auf der einen Ebene eine PLA eine Instruktion oder Adresse erzeugt und alle übrigen PLAs auf diese Instruktionen oder Adressen mit der Ausführung einer Subroutine auf einer darunterliegenden Ebene ansprechen. Genauer gesagt liefern die in den genannten Patentschriften beschriebenen PLAs eine Ablaufsteuerung für eine zentrale Verarbeitungseinheit. Ferner ist es durch die US-Patentschrift 3 983 538 bekannt, die Verarbeitung von Datenverarbeitungsabläufen mittels eines Moduls durchzuführen, der aus einer Matrixanordnung von UND- und ODER-Gliedern besteht, der mit einem Speicher verbunden ist. Der Modul arbeitet hierbei autonom als selektiv programmierter Miniprozessor mit einem unterschiedlich spezialisierten oder personalisierten Operationsablauf und Repertoire. Obwohl die Kombination eines solchen Moduls mit einem Speicher als Hochgeschwindigkeitssimulator angesehen werden kann, hat sie aber den Nachteil vergleichsweise hoher Kosten, da der hierfür benötigte Modul relativ groß sein muß.

Die Erfindung hat sich daher die Aufgabe gestellt, für eine Datenverarbeitungsanlage eine Lösung zur nachträglichen Funktionserweiterung anzugeben, die keiner Änderung der internen Struktur des Prozessors bedarf und die ohne Einbuße an Geschwindigkeit mit kleineren und somit preislich günstigeren pogrammierbaren Logikanordnungen für die Funktionserweiterungen auskommt.

Gelöst wird diese Aufgabe der Erfindung durch die im Hauptanspruch angegebenen Merkmale.

Vorteilhafte Ausgestaltungen und Weiterbildungen des Gegenstandes der Erfindung sind den Unteransprüchen zu entnehmen.

Bei der vorliegenden Erfindung wird deshalb durch den Anschluß mindestens einer programmierbaren Logikanordnung an einen Mikroprozessor der Vorteil einer — auch nachträglichen — Funktionserweiterbarkeit und funktionellen Flexibilität erreicht, wobei keineswegs (wegen der Verwendung handelsüblicher Mikroprozessoren und programmierbarer Logikanordnungen) die Kosten in die Höhe steigen und die Verarbeitungsgeschwindigkeit sinkt. Außerdem ist die Funktionserweiterung der Datenverarbeitungsanlage ohne strukturelle Änderung des Mikroprozessors selbst möglich, so daß auch hieraus Vorteile resultieren.

Im folgenden werden Ausführungsbeispiele der Erfindung anhand der Figuren näher erläutert. Es zeigt

Fig. 1 ein Blockschaltbild einer modular aufgebauten Datenverarbeitungseinrichtung,

Fig. 2 ein Blockschaltbild eines bekannten Mikroprozessors, der in der Datenverarbeitungseinrichtung nach Fig. 1 verwendbar ist,

Fig. 3 ein Blockschaltbild eines Makroprozessors,

Fig. 4 eine Prinzipdarstellung einer Speicherbelegung für einen Makroprozessor nach Fig. 3,

Fig. 5 das Blockschaltbild einer peripheren Ein-/Ausgabekonfiguration,

Fig. 6 ein Betriebsablaufdiagramm für den Mikroprozessor nach Fig. 2,

Fig. 7 das Blockschaltbild einer direkten Speicherzugriffssteuerung,

Fig. 8 ein Betriebsablaufdiagramm für den Makroprozessor nach Fig. 3,

Fig. 9A, 9B ein Zeitsteuerdiagramm für den Makroprozessor nach Fig. 3,

Fig. 10 ein Betriebsablaufdiagramm für die periphere Ein-/Ausgabekonfiguration nach Fig. 5 und

Fig. 11A, 11B u. 12 ein Zeitsteuerdiagramm für die periphere Ein-/Ausgabekonfiguration nach Fig. 5.

Fig. 1 zeigt als Blockschaltbild eine Ausführungsform der vorliegenden Erfindung. Die Systemkomponenten der modularen Datenverarbeitungseinrichtung verkehren untereinander über eine Standard-Systemsammelleitung, bestehend aus einer Steuersammelleitung 1, einer Adressensammelleitung 2 und einer Datensammelleitung 3. Diese Sammelleitungsstruktur ist ein Hauptmerkmal käuflich erhältlicher Mikroprozessoren, durch das sowohl die Schaltkreisstruktur als auch die Programmierung für Mikrocomputeranwendungen vereinfacht werden. Die programmierbaren Logikanordnungen (PLAs) 4, 5 und 6 dienen als funktionelle Ausführungseinheiten (FEUs). Sie sind Teil der Systemmodule und derart aufgebaut, daß sie direkt auf die Systemsammelleitungen gesteckt werden können, um höher strukturierte Instruktionen ausführen zu können. Der Mikroprozessor (MPU) 7, der Festwertspeicher (ROM) 8 und der Leseschreibspeicher (RAM) 9 sind Standardkomponenten käuflich erhältlicher Mikrocomputer wie beispielsweise der Mikrocomputer 6800 von Motorola oder 8080 von Intel. Obwohl die Anzahl der Komponenten in den Mikrocomputern 6800 und 8080 unterschiedlich sind, so haben sie doch gleiche Sammelleitungsstruktur, nämlich 10 Steuerleitungen, 10 Adressenleitungen und eine 8 Bit breite bidirektionale (zweiseitige) Datensammelleitung. Fig. 2 zeigt ein Blockdiagramm der 6800 Prozessoreinheit. Es ist hierzu zu erwähnen, daß zwei oder mehr programmierbare Logikanordnungen, welche die gleiche Architektur haben, parallel angeschlossen werden können, um die funktionellen Fähigkeiten zu erweitern, wie beispielsweise die Zahl der Makrobefehle, der peripheren Ein-/Ausgabeanschlüsse oder die Zahl der Adreßbits für einen direkten Speicherzugriff (DMA).

Die Architektur der schaltkreismäßigen Realisierung der Erfindung kann sich in drei Ausführungsbeispielen niederschlagen, die mit MP, PIO und DMA bezeichnet sind. Die MP- Konfiguration (PLA 4 in Fig. 1) führt hochstrukturierte Makrofunktionen aus, wie beispielsweise Unterroutinen, Multiplikationen, Umwandlungstabellen, spezielle Algorithmen, Zähler-/Zeitgeberfunktionen, Paritätserkennung/-erzeugung, zyklische Redundanzprüfungen (CRC), Abfragefolgen, pingpong Puffersteuerungen, Vergleichs-/Verzweigungsfunktionen und dergleichen. Die PIO-Konfiguration (PLA 5) übt die Schnittstellenfunktion für die peripheren Geräte 10 mit dem Mikroprozessor 7 aus und führt Ein-/Ausgabefunktionen durch, wie beispielsweise SERDES-Funktionen (Serien-/Parallelwandlung von Datenkonfigurationen), dient als Datenformatgenerator, als Zeitintervalldekodierer, als Datendetektor, als Übergangsimpulsgenerator, als Modem (Modulator/Demodulator) und führt Prozesse aus, wie beispielsweise Addieren, Einschieben, Entfernen. Die DMA-Konfiguration (PLA 6) überträgt Datenblöcke direkt zwischen dem Hauptspeicher (RAM 9) und (nicht dargestellten) externen Geräten. Im folgenden werden Ausführungsbeispiele erläutert, die zeigen, wie die programmierbaren Logikanordnungen 4, 5 und 6 programmgesteuert mit dem Mikroprozessor 7 in Verbindung treten. Mikroprozessor-Konfiguration (MP): Die normale Operation der von dem Mikroprozessor 7 gesteuerten programmierbaren Logikanordnung 4 erfordert, daß bestimmte Steuer- und Zeittaktsignale vorliegen und daß die peripheren Schaltungen der programmierbaren Logikanordnung 4 in der Weise aufgeteilt sind, daß sie in effektiver Weise spezielle Funktionen, entweder kombinatorisch oder sequenziell ausführen. Fig. 3 zeigt als Blockdiagramm den Zuschnitt der programmierbaren Logikanordnung als Mikroprozessor-Konfiguration MP.

Die zweiseitige Datensammelleitung 3 überträgt Daten von und zu dem Mikroprozessor 7. Die Datenausgangstreiber 11 sind als Treiber ausgebildet, die drei Zustände einnehmen können und die von der TSC-Leitung 12 gesteuert werden. Wenn die Treiber über die Leitung 12 eingeschaltet werden, dann nimmt ihr Ausgang einen Zustand hoher Impedanz an. Auf diese Weise ist es möglich, die Daten, die in den Ausgangsverriegelungsschaltungen 13 (OL) gespeichert sind, von der Datensammelleitung zu isolieren. Die Dateneingangsverriegelungsschaltungen 14 (IL) sind durch Torschaltungen durchschaltbare Verriegelungsschaltungen (D-Typ oder Polaritätshalter), die als Eingangspufferspeicher dienen und von der ILC-Leitung 15 gesteuert werden. Wenn das Steuersignal auf der Leitung 15 einen hohen Pegelwert annimmt, dann ist der Eingang nicht durchgeschaltet. Auf diese Weise wird verhindert, daß Daten von angeschlossenen PLAs verarbeitet werden.

Zur Adressierung eines Makrobefehls, der eine Gruppe von Bitmustern (oder Produktterme) darstellt, die eine spezielle Funktion ausführen, dienen acht Eingänge. Es ist hierbei wesentlich, daß die Adresse selbst als Operationscode einer Makroinstruktion dient. Hierbei dienen acht Eingangsverriegelungsschaltungen 14, die mit der Adressensammelleitung 2 verbunden sind, als Instruktionsregister. Die Zahl der verschiedenen adressierbaren Makrobefehle hängt nun davon ab, wie die acht Eingänge mit der Adressensammelleitung 2 verbunden sind. Fig. 4 zeigt hierzu die Speicherbelegung eines typischen Mikroprozessorsystems. Diese Belegungsdarstellung zeigt die Speicherstellen, denen die verschiedenen Systemkomponenten zugeordnet sind. So sind beispielsweise die Adreßbits A 15 und A 14 mit den Adresseneingängen der PLA 4 verknüpft. Wenn daher das Signal auf der Adressenleitung A 15 einen hohen Pegelwert und das Signal auf der Adressenleitung A 14 einen niedrigen Pegelwert aufweist, wird stets die programmierbare Logikanordnung PLA 4 mit dem Mikroprozessor MPU (7) über die Datensammelleitung 3 zusammengeschaltet sein. Da zwei Bits dazu dienen, die PLA 4 zuzuteilen, erlauben die übrigen 6 Bits die Verwendung von maximal 64 Makrobefehlen (OP-Codes). Die Zahl der Makrobefehle könnte noch höher sein, wenn zwei oder mehr Makrobefehle stets in Sequenz auftreten würden. Diese Makrobefehle können auf mehrere PLAs, wie beispielsweise PLA 4, verteilt werden. Es sei aber hier erwähnt, daß wegen der in Fig. 4 dargestellten Speicherbelegungstechnik die Verwendung nur weniger Speicheradressen nutzlos ist. Wenn jedes Bit einer verfügbaren Speicheradresse benutzt werden soll, dann muß auch eine 16-adrige Adressensammelleitung benutzt werden oder externe Dekodierung vorgesehen werden.

Der Rückstelleingang 16 in Fig. 3 stellt PLA 4 zurück und schaltet es aus dem abgeschalteten Zustand wieder ein, der sich aus einem Fehler der Stromversorgung oder einer initialen Einschaltsequenz des Prozessors ergeben haben könnte. Wenn die Eingangsleitung 16 ein Signal mit hohem Pegel führt, dann sind alle Register- und Verriegelungsschaltungen in der ODER-Anordnung 17 der PLA 4 gelöscht, und auch die Halteleitung 23 führt ein Signal mit hohem Pegel.

Der Lese-/Schreibeingang (R/W) 21 ist mit der R/W Steuerleitung 21 des Mikroprozessors 7 in Fig. 2 gekoppelt. Der Lese-/Schreibeingang 21 teilt der PLA 4 mit, ob sich der Mikroprozessor 7 in einem Lese (hoher Pegel)- oder Schreib (niedriger Pegel)-Zustand befindet. Der Lese-/Schreibeingang ist auch mit dem ILC-Eingang 15 verbunden, um den Datenfluß, entweder in Richtung Mikroprozessor 7 oder in Richtung PLA 4, zu steuern.

Bei einem Lesezyklus führt die ILC-Leitung 15 ein Signal mit hohem Pegel, das die über Torschaltungen geführten Eingänge zu den Eingangsverriegelungsschaltungen 14 sperrt. Bei der Durchführung eines Schreibzyklus sind diese Tore geöffnet. Der Einschalteingang (DBE) 22 der Datensammelleitung ist mit der DBE-Steuerleitung 22 in Fig. 2 des Mikroprozessors verbunden, die im normalen Betrieb von dem Phase-2-Taktsignal ($\Phi$ 2) gesteuert wird. Das Signal auf der DBE-Steuerleitung 22 zeigt der PLA 4 an, daß gültige Daten auf der Datensammelleitung 3 vorliegen und die Ausführung eines Makrobefehls stattfinden kann.

Die $\overline{\text{Halt}}$-Ausgangsleitung 23 ist mit der $\overline{\text{Halt}}$-Steuerleitung 23 in Fig. 2 des Mikroprozessors 7 verbunden. Wenn die Ausgangsleitung 23 ein Signal mit niedrigem Pegel führt, wird der Betrieb des Prozessors 7 angehalten und der Prozessor am Ende einer Instruktion gestoppt. Da der Mikroprozessor 7 und die PLA 4 synchron arbeiten, versetzt das $\overline{\text{Halt}}$-Signal den Mikroprozessor so lange in einen Wartezustand, bis die PLA 4 ihre Aufgabe beendet hat. Die PLA 4 kann mehr als einen Zyklus für die Ausführung eines Makrobefehls benötigen, wenn dieser eine sequenzielle Funktion ist. Ist der Makrobefehl jedoch ein kombinatorischer, dann dauert seine Ausführng nur einen Zyklus und das $\overline{\text{Halt}}$-Signal 23 wird nicht benötigt.

Die Eingabeleitungen 24 und Ausgabeleitungen 25 dienen nur Prüfzwecken. Da alle Verriegelungsschaltungen in der ODER-Anordnung 17, das sind die Akkumulatoren 26, das Makroinstruktionsregister (MIR) 27 und die Ausgabeverriegelungsschaltungen 13 in Reihe geschaltet sind, um so ein Schieberegister zu bilden, können die Prüfdaten am Eingabeeingang hinein und die Ergebnisdaten der Prüfung am Ausgabeausgang herausgeschoben werden.

Für den Steuer- und Adresseneingangsteil der UND-Anordnung 26 ist eine Zwei-bitunterteilung nicht erforderlich, weil er strikt für die Dekodierung und nicht für die Durchführung von Logikoperationen verwendet wird. Die genannten Eingänge sind mit Phasenspaltern 27 verbunden. Der Datensammelleitungsteil 28 und der Rückführungsteil 29 der UND-Anordnung haben eine Zweibitunterteilung zur Verbesserung der Logikfunktion. Die UND-Anordnung, die über 100 Produktterme verfügt, hat eine 80 × 100 Bit Organisation. Für die Ausführung von Instruktionen einer höheren Programmiersprache, als einer von mehreren Anwendungen, wird die Zahl der Produktterme wichtiger als die Zahl der Eingänge. Der Rückführungsteil ist in Logik-(30) und Makroauswahlfelder 31 unterteilt. Das Logikfeld 30, das eine Breite von 16 Bits aufweist, dient zur Durchführung kombinatorischer und sequenzieller Funktionen. Das Makroselektionsfeld 31 ist dagegen 4 Bits breit und dient zur Selektion von (insgesamt 16) Makrobefehlen.

Der Rückführungsteil der ODER-Anordnung 17 ist in das Akkumulatorfeld 26 und das Makroinstruktionsregister-Feld 27 unterteilt. Das Akkumulatorfeld mit einer Breite von 16 Bits verfügt über zwei Akkumulatoren A und B, die eine Zweibitunterteilung haben, beispielsweise A0, B0, A1, B1, A2, B2 usw. Das Makroinstruktionsregister-Feld MIR dient dem gleichen Zweck der Auswahl von Makrobefehlen, wie die Adressensammelleitung 2. Für die Durchführung sequenzieller Funktionen (eine Makroinstruktion nach der anderen) beschleunigt jedoch das Makroinstruktionsregister-Feld 27 die Ausführung, da der Prozessor keine Makroinstruktion (OP CODE) zur programmierbaren Logikanordnung über die Adressensammelleitung 2 übertragen muß. Der Ausgabeteil 13 der Anordnung verwendet JK-Flipflops (Verriegelungsschaltungen) als Ausgabepuffer (mit 11 Bits). Diesem Teil sind Chipausgangstreiber (OCD) 11 nachgeschaltet, die ebenfalls drei Zustände einnehmen können. Die ODER-Anordnung 17 hat eine 62 × 100 Bit Organisation.

Periphere Ein-/Ausgabe (PIO)-Konfiguration: In der PIO 5-Konfiguration nach Fig. 5 sind Ein- und Ausgangsanschlüsse hinzugekommen, denen bestimmte Steuersignale zugeordnet sind. Die peripheren Eingänge 32 und die peripheren Ausgänge 33 sind mit den (nicht dargestellten) peripheren Geräten verbunden, wie beispielsweise mit einer Tastatur, einer Bildschirmeinheit, einem Drucker, einem magnetischen Speicher (Band oder Platte) oder Gruppen von Sensoren und Betätigungselementen. Während des normalen Betriebs dienen diese Ein-/Ausgangsanschlüsse zur Übertragung von Daten (ein Bit oder zwei Bits) zwischen den externen Geräten und dem Mikroprozessor 7 (Fig. 1) über die programmierbare Logikanordnung 5.

Das »Eingang fertig«-Signal auf der Leitung 34 kommt von einem peripheren Gerät. Dieses Signal meldet der programmierbaren Logikanordnung 5 (PLA 5), daß ihre Daten am peripheren Eingang zur Verfügung stehen. Das Eingangsbestätigungssignal auf der Leitung 35 wird zu dem peripheren Gerät übertragen. Es meldet diesem Gerät, daß die Daten empfangen wurden. Die Ausgabeanforderungsleitung 36 meldet der PLA 5, daß das periphere Gerät Daten anfordert. Die Ausgabefertig-Leitung 37 meldet dem peripheren Gerät andererseits, daß die Daten an den peripheren Ausgangsschaltkreisen der PLA 5 verfügbar sind. Der Unterbrechungsanforderungsausgang ($\overline{\text{IRQ}}$) 38 fordert die Erzeugung einer schaltkreisgesteuerten Unterbrechungsfolge in der Maschine an. Das Betriebsablaufdiagramm der schaltkreisgesteuerten Unterbrechungsfolge ist in Fig. 6 dargestellt. Bevor der Prozessor diese Anforderung erkennt, wartet er so lange, bis die gerade laufende Instruktion vollständig ausgeführt ist. Dann beginnt die Maschine mit der Unterbrechungsfolge, wenn das Unterbrechungsmaskenbit im Bedingungscoderegister des Mikroprozessors 7 nicht gesetzt ist (47 in Fig. 6). Der Inhalt der Indexregister 39 und 40 (in Fig. 2), der Programmzähler 40 und 42, der Akkumulatoren 43 und 44 und Bedingungscoderegister 35 wird dann im Stapel abgespeichert (48 in Fig. 6). Als nächstes wird der Mikroprozessor 7 auf die Unterbrechungsanforderung damit reagieren, daß er das Unterbrechungsmaskenbit aufsetzt (49 in Fig. 6), so daß keine weiteren Unterbrechungen mehr auftreten können. Am Ende des Zyklus wird der Programmzähler mit einer 16-Bit-Adresse geladen (50 in Fig. 6), die der Inhalt der Speicherstellen FFF 8 und FFF 9 ist und die auf eine Vektoradresse zeigt. Eine an diesen Speicherstellen geladene Adresse veranlaßt den Mikroprozessor 7 zu einer Unterbrechungsroutine im Speicher zu verzweigen.

Die $\overline{\text{Halt}}$-Leitung 23 muß einen hohen Signalpegel führen, damit Unterbrechungen als solche erkannt werden. Externe Unterbrechungsprioritäts-Schaltungen können an die Maschine angeschlossen werden, wenn mehr als eine $\overline{\text{IRQ}}$-Leitung verwendet wird.

Die in Fig. 5 dargestellten peripheren Schaltungen der UND-Anordnung 51 verfügen über Eingangsverriegelungsschaltungen 52, Phasenspalter 53 und »Zwei auf Vier«-Dekodierer 54 und 55, so daß sie den entsprechenden Baugruppen der UND-Anordnung 26 der programmierbaren Logikanordnung (MP) 4 in Fig. 3, die zuvor schon erläutert wurde, ähnlich sind. Es sei in diesem Zusammenhang erwähnt, daß die Eingangsverriegelungsschaltung 52 aus D-Flipflops besteht und als Eingangspuffer dient. Sie ist erforderlich, weil die Signale von den peripheren Geräten nicht stabil sind. Die Impulsbreite kann entweder zu schmal sein oder durch Prellen mit Lücken versehen sein. Die Eingangsverriegelungsschaltung läßt daher zu, daß das Eingangssignal eine minimale Impulsbreite (Verfügbarkeitszeit) hat. Die UND-Anordnung 41 hat eine 96 × 80 Bit oder eine 112 × 80 Bit Organisation, die abhängig davon ist, ob der Eingangsanschluß über 8 oder 16 Leitungen verfügt.

Die peripheren Schaltkreise der ODER-Anordnung 56 enthalten Akkumulatoren 57 (A und B), ein Makroinstruktionsregister (MIR) 58, eine Ausgangsverriegelungsschaltung 59, Chipausgangstreiber (OCD) 60 sowie eine TSC-Steuerung 61 für die drei Zustände, welche die Treiber einnehmen können. In dieser Hinsicht sind die genannten peripheren Schaltungen diejenigen der ODER-Anordnung 17 der programmierbaren Logikanordnung 4 in Fig. 3, die ebenfalls zuvor schon erläutert wurde, ähnlich. Die ODER-Anordnung 56 hat eine 84 × 80 Bit oder 100 × 80 Bit Organisation, je nach Zahl der Anschlußleitungen, über die der Ausgangsanschluß verfügt.

## Direktspeicherzugriffs-Konfiguration (DMA-Konfiguration)

Bei Bildschirm-, Drucker-, Plattenspeicher- oder Bandspeicheranwendungen wird häufig ein Datenblock zwischen dem Hauptspeicher (RAM) 9 und einem peripheren Gerät (das nicht dargestellt ist) hin und her übertragen. Die DMA-Technik erlaubt es, daß die Daten in den Hauptspeicher 9 und aus dem Hauptspeicher 9 übertragen werden, ohne daß der Mikroprozessor 7 beteiligt ist. Auf diese Weise wird der Durchsatz, d. h. die Geschwindigkeit des Mikroprozessors 7 verbessert. Fig. 7 zeigt eine programmierbare Logikanordnung 6, die über eine Architektur gemäß der DMA-Konfiguration verfügt. Bei dieser Konfiguration werden eine 16 Bit-Adressensammelleitung 62 am Ausgang der PLA 6 sowie die folgenden Steuersignale benötigt: Sammelleitung verfügbar (BA) 63, gültige Speicheradresse ($\overline{\text{VMA}}$) 64 und Lesen/ Schreiben (R/W) 67. Die Eingangsleitung 63 für das Sammelleitungverfügbar-Signal kommt vom Mikroprozessor 7 und dient zur Gewährung von Direktspeicherzugriffen (DMA). Sie nimmt einen hohen Pegelwert an, wenn der Mikroprozessor 7 anhält und alle Drei-Zustandsleitungen eine hohe Impedanz aufweisen, wodurch angezeigt wird, daß DMA-Übertragungen beginnen können.

Die gültige Speicheradressen ($\overline{\text{VMA}}$)-Ausgangsleitung 64 kommt von einer Torschaltung mit offenem Kollektor am Ausgang 65 der programmierbaren Logikanordnung. Es liegt an ihr ein hoher Signalpegel an, wenn der Mikroprozessor 7 angehalten ist. Dieses Signal ist galvanisch mit der VMA-Leitung 66 des Mikroprozessors ODER-verknüpft und dient zur Betätigung des Hauptspeichers 9 während eines DMA-Transfers. Die Lese-/Schreib (R/W)-Ausgangsleitung 67 führt ein Kommandosignal, das zur Steuerung der Übertragungsrichtung bei einer DMA-Operation dient. Diese Ausgangsleitung ist an einen Drei-Zustands-Ausgangstreiber angeschlossen, der von der TSC2-Leitung 70 gesteuert wird. Die R/W-Ausgangsleitung 67 am PLA 6-Eingang ist über eine Torschaltung invers mit der BA-Leitung 63 in Fig. 7 verbunden. Dieses bedeutet, daß wenn das Signal auf der BA-Leitung 63 einen hohen Pegel einnimmt, dann das R/W-Ausgangssignal auf der Leitung 67 keine Wirkung auf die entsprechende Spalte in der UND-Anordnung 68 der PLA 6 hat.

Es sei an dieser Stelle erwähnt, daß die PLA-Ausgänge 62, 69 und 70, die mit der Adressensammelleitung 2, der Datensammelleitung 3 und der R/W-Ausgangsleitung 67 des Mikroprozessors verbunden sind, Drei-Zustandsausgänge sind, die sich im Zustand hoher Impedanz befinden, wenn das Signal auf der BA-Leitung 63 einen niedrigen Pegelwert einnimmt und der Mikroprozessor 7 die Adressen-, Daten- und Steuersammelleitungen steuert. Das $\overline{\text{Halt}}$-Signal 23 am Ausgang dient als DMA-Anforderung, die dem Mikroprozessor 7 das Anhalten befiehlt und dessen Drei-Zustandsleitungen in den Zustand hoher Impedanz einstellt. Die hierbei ablaufenden Operationen und die Zeitsteuerung von DMA-Transfers durch das Anhalten des Mikroprozessors 7 sind an sich bekannt. Der Rest der Ein- und Ausgangsleitungen sowie die peripheren Schaltkreise der PLA 6 sind denen ähnlich, die schon im Zusammenhang mit den MP- und Ein-/Ausgabe-Konfigurationen beschrieben wurden.

Programmsteuerung:

Innerhalb jeder PLA gibt es Gruppen von Bitmustern oder Produkttermen, die Makrobefehle genannt werden und spezielle Funktionen ausführen. Jedem Makrobefehl ist ein Operationscode (OPCODE) einer hochwertigen Instruktion zugeordnet, die von der UND-Anordnung über die Adressensammelleitung verglichen (oder dekodiert) wird. Wenn eine Übereinstimmung vorliegt, wird der Makrobefehl ausgeführt und das Resultat in den Akkumulatoren oder in den Ausgangsverriegelungsschaltungen, abhängig von der auszuführenden Funktion, zwischengespeichert. Das Resultat muß dann von dort entweder zu dem Prozessor zurückübertragen werden oder zu dem externen Gerät.

Jede PLA ist eine Hochgeschwindigkeits-Funktionausführungseinheit für die Ausführung höherer Instruktionen, die normalerweise von Unterroutinen schrittweise sequenziell innerhalb eines Prozessors ausgeführt werden.

Die Steuerung des Datentransfers zwischen dem Mikroprozessor 7 und den PLAs 4, 5 und 6 in Fig. 1 kann mit Hilfe der folgenden Instruktionen durchgeführt werden, wobei beispielsweise ein Motorola 6800 Mikroprozessor verwendet wird.

| Mnemonisch | Opcode/Adresse Modus | | Operationen |
|---|---|---|---|
| STAA | B 7 | Extnd | Speichere Akkumulator A, (A) →M |
| STAB | F 7 | Extnd | Lade Akkumulator B, (B) →M |
| LDAA | B 6 | Extnd | Lade Akkumulator A, (M) →A |
| LDAB | F 6 | Extnd | Lade Akkumulator B, (M) →B |
| JMP | 7E | Extnd | Springe |
| RTS | 39 | Inher | Rückkehr aus Subroutine |
| RIT | 38 | Inher | Rückkehr aus Unterbrechung |

Um die Verwendung der oben aufgelisteten 6800-Instruktionen zu beschreiben, werden die in der folgenden Tabelle dargestellten PLA-Makroinstruktionen und ihre Operationscode verwendet.

| Mnemonisch | Opcode (Hex) | Operationen |
|---|---|---|
| Rückstellen | 8000 | Rückstellen |
| CNV | 8001 | Datenumwandlung |
| P10LO | 8002 | PLA 1 Ausgangsverriegelungsschaltung offen |
| CMP & AJS | 8003 | Vergleichen und Abstimmen |
| P20LO | 8004 | PLA 2 Ausgangsverriegelungsschaltung offen |
| DBPO | 8005 | Datensammelleitung zu peripherem Ausgang |
| STP3A | 8006 | Speichere PLA 3 Akkumulator A |
| STP3B | 8007 | Speichere PLA 3 Akkumulator B |
| INCMPS | 8008 | Wähle Increment, Vergleiche und Adressiere-Ausg.-Makrobefehl |
| DPOS | 8009 | Wähle Datensammelleitung zu peripherem Ausgangsmakrobefehl |
| DMAR | 800A | DMA Anforderung |

Die folgenden Beispiele demonstrieren die Verwendung der oben dargestellten Instruktionen.

Beispiel 1

Es sei angenommen, daß ein Byte der binären Daten, die im 6800 (MPU 7)-Akkumulator A mittels einer Tabelle in der PLA 4 der Fig. 1 umgewandelt und in den Akkumulator B der MPU 7 zurückgespeichert werden soll. Der Programmablauf für diese Operation ist in Fig. 8 dargestellt. Wenn der Programmzähler (PC) 41 und 42 in Fig. 2 eine JMP-Instruktion in der Speicherstelle n des ROM 8 (Festwertspeicher) feststellt, springt er auf die Subroutinenstelle k nach der Ausführung der JMP-Instruktion. Gleichzeitig wird die Stelle der nächsten Hauptinstruktion (n+2) im Stapel abgespeichert. Danach startet die MPU 7 die Ausführung der Subroutine (Unterroutine) durch den Abruf von STAA, CNC (Umwandlungsinstruktion, codiert als 10000001; vgl. Fig. 3) und sie führt sie dann aus. Der zugehörige Zeitablauf ist in Fig. 9A dargestellt. Während dieses »Schreib«-Zyklus wird der Inhalt des Akkumulators A über die Datensammelleitung 3 zu der PLA übertragen, und zwar über die CNV1-Tabelle der UND-Anordnung 26, und das erhaltene Resultat in den Ausgabeverriegelungsschaltungen 13 in Fig. 3 gespeichert. Am Ende des ersten Umwandlungszyklus (CNV1; Fig. 3) sind sowohl das $\overline{\text{Halt}}$-Signal 23 als auch die Drei-Zustandstreiber 11 der PLA 4 eingeschaltet. Das $\overline{\text{Halt}}$-Signal wird dann aber abgeschaltet, wenn der zweite Umwandlungszyklus (CNV2) beendet ist. Die Drei-Zustandstreiber 11 bleiben jedoch im Zustand hoher Impedanz.

Es ist erwähnenswert, daß während des Ablaufs von Abrufzyklen der STAA-Operationscode (1 Byte) im Befehlsregister des Mikroprozessors 7 und der CNV-Operationscode (2 Byts) in einem Zwischenregister innerhalb des Mikroprozessors 7 gespeichert werden. Während der Ausführungszyklen wird der STAA-Operationscode und der DNV-Operationscode in den Dekodierschaltungen des Mikroprozessors 7 bzw. in der UND-Anordnung 26 der PLA 4 dekodiert. Wenn das $\overline{\text{Halt}}$-Signal aktiviert wird, dann wird der Mikroprozessor 7 so lange in den Wartezustand gebracht, bis das $\overline{\text{Halt}}$-Signal abgeschaltet ist. Danach wird der Programmzähler weitergeschaltet, und der Mikroprozessor 7 startet den Abruf der nächsten Instruktionen, LDAB und P10LO (PLA 4 Ausgangsverriegelungsschaltung-offen-Instruktion, codiert als 10000010; vgl. Fig. 3) und führt sie aus. Wenn die P10LO-Instruktion ausgeführt wird, nimmt das TSC-Signal auf der Leitung 12 einen niedrigen Pegelwert an. Dieses bringt die Ausgänge der Ausgangsverriegelungsschaltungen 13 aus dem Zustand hoher Impedanz wieder in den Normalzustand zurück, so daß der Inhalt der Ausgangsverriegelungsschaltungen 13 auf der Datensammelleitung 3 verfügbar wird. Der zeitliche Ablauf dieses Lesezyklus ist in Fig. 9B dargestellt. Nachdem dieser Zyklus vollständig beendet ist, wird der Inhalt der Ausgangsverriegelungsschaltungen 13 in den Akkumulator B geladen, und eine RTS-Operation (Rückkehr aus der Subroutine) findet statt. Der Programmzähler PC stellt sich dann auf die Stelle N + 2 der nächsten Hauptinstruktion ein. Der Stapelzeiger SP zeigt dagegen auf die vorhergehende Speicherstelle m, wie Fig. 8 zeigt.

Beispiel 2

Es sei hier angenommen, daß Daten eines peripheren Gerätes 10 in Fig. 1 (beispielsweise ein Sensor) umgewandelt werden sollen, wobei die CNV-Tabelle in der PLA 5 der Fig. 5 verwendet werden soll und das Resultat für einen Vergleich und eine Abstimmung mittels des CMP & AJS-Makrobefehls in die PLA 4 übertragen werden soll. Die abgestimmten Daten werden dann im Akkumulator A des Mikroprozessors 7 zwischengespeichert, bis das periphere Gerät diese anfordert, um beispielsweise einen mechanischen Schalter, der an das periphere Gerät angeschlossen ist, zu betätigen.

Die Fig. 6 und 10 zeigen den Ablauf dieser speziellen Operation. Bezugnehmend auf Fig. 5 ist zu sehen, daß die Daten zu der CNV-Tabelle der UND-Anordnung 51 gelangen, wenn die Daten von dem peripheren Gerät 10 bereit und das Eingang-Fertig-Signal auf der Leitung 36 vorliegen. Das Resultat dieser Operation wird in den Ausgangsverriegelungsschaltungen 59 gespeichert. Gleichzeitig nimmt das Signal $\overline{IRQ}$ auf der Leitung 36 einen niedrigen Pegelwert ein. Wenn der Mikroprozessor das $\overline{IRQ}$-Signal abfühlt, tritt er in eine schaltkreisgesteuerte Unterbrechungssequenz ein, die in Fig. 6 gezeigt ist. Der Programmzähler PC springt zur Unterbrechungsroutinenstelle k, die in Fig. 10 dargestellt ist. Der Mikroprozessor 7 ruft die Instruktionen LDAA und P20LO ab (PLA 5 Ausgangsverriegelungsschaltung-offen-Instruktion, codiert als 10000100; vgl. Fig. 5) und führt sie aus. Die Funktion der P20LO-Instruktion ist die gleiche, wie die P10LO-Instruktion, die zuvor erläutert wurde. Nach deren Ausführung lädt der Mikroprozessor den Inhalt der PLA 5-Ausgangsverriegelungsschaltungen 59 in den Akkumulator A.

Fig. 11A zeigt die Zeitbedingungen für die Steuerleitungen, die PLA 5 und den Mikroprozessor 7. Wie in Fig. 10 dargestellt ist, ruft, wenn der Programmzähler auf die Speicherstelle K + 1 gelangt, der Mikroprozessor 7 die STAA und CMP & AJS-Instruktionen ab und führt diese aus. Dieses bewirkt, daß der Inhalt des Akkumulators A zur PLA 4 übertragen und von dem Makrobefehl CMP & AJS (Operationscode 10000011; vgl. 3) verarbeitet wird. Das Ergebnis wird dann in den PLA 4-Ausgangsverriegelungsschaltungen 13 gespeichert. Diese Daten werden zu dem Akkumulator zurückübertragen, wenn der Mikroprozessor 7 die nächsten Instruktionen LDAA und P10LO ausführt. Schließlich beendet die Ausführung der Unterbrechungsrückkehrinstruktion (RTI) die Unterbrechungsroutine und übergibt die Steuerung des Mikroprozessors 7 dem Hauptprogramm.

Da das periphere Gerät 10 und der 6800-Mikroprozessor (MPU 7) asynchron arbeiten, kann die Anforderung von Daten durch das periphere Gerät entweder vor oder nach der Ausführung der RTI-Instruktion auftreten. Tritt die Anforderung vor der Ausführung der RTI-Instruktion auf, indem die Ausgabeanforderungsleitung 36 (von dem peripheren Gerät 10) im Pegel angehoben wird, wodurch das $\overline{IRQ2}$-Signal auf der Leitung 71 in Fig. 5 aktiviert wird, dann wird der Mikroprozessor 7 die nächste Unterbrechung solange nicht anerkennen, bis die erste vollständig bedient wurde. Wenn aber das $\overline{IRQ1}$-Signal von dem Mikroprozessor 7 anerkannt wird, dann steuern die Unterbrechungsprioritäts-Schaltkreise den Mikroprozessor auf die entsprechenden Speicherstellen im Festwertspeicher 8, um den Vektor zu erhalten, wie es in Fig. 10 dargestellt ist. Der nächste Schritt des Mikroprozessors besteht darin, die Instruktionen STAA und DBPO (Datensammelleitung-zum-peripheren-Ausgang-Instruktion, codiert als 10000101; vgl. Fig. 5) abzurufen und diese auszuführen. Dadurch gelangt der Inhalt des Akkumulators A über die Datensammelleitung 3 zu dem peripheren Ausgangsanschluß. Gleichzeitig wird die Ausgabefertig-Leitung 37 aktiviert.

Fig. 11 zeigt den zeitlichen Ablauf des Datenflusses vom Mikroprozessor 7 zum peripheren Gerät 10. Es sei hier erwähnt, daß bei normalen Übergabeoperationen die Eingang-fertig (34)- und die Ausgabeanforderungs (36)-Signale in Fig. 5 (beide vom peripheren Gerät) auftreten, nachdem die Ausgangfertig (37)- und Eingabebestätigungs (35)-Leitungen beide von der PLA 4, hohe Pegelwerte einnehmen. Fig. 12 zeigt den gesamten Datenfluß zwischen dem peripheren Gerät und dem Mikroprozessor 7 über die PLAs 4 und 5. Außerdem sind die Instruktionen dargestellt, die zur Steuerung des Datenflusses verwendet werden.

Beispiel 3

Es sei hier angenommen, daß ein Datenblock vom Hauptspeicher 9 der Fig. 1 zu einem (nicht dargestellten) Datensichtgerät übertragen werden soll, indem die erste Speicherstelle M1 und die letzte Speicherstelle M2 des Datenblockes definiert werden. (Bei einer normalen Operation ist ein Eingabegerät, beispielsweise eine Tastatur, mit dem Eingang des peripheren Gerätes 10 verbunden. Das Datensichtgerät ist mit dem Ausgang des peripheren Gerätes zu der PLA 5 verbunden, die in Fig. 1 dargestellt sind, während die DMA-Operation von der PLA 6 in Fig. 7 ausgeführt wird).

Der Ablauf für diese DMA-Übertragung, die Gebrauch von der Unterbrechungsbedienungsroutine macht, ist in der folgenden Tabelle dargestellt:

| Bezeichnung | Mnemonisch | Operand | Commentar | Zyklen |
|---|---|---|---|---|
| TNTR. | LDAA | M1 ADR | Lade AKKU A mit M1 | 3 |
| | LDAB | M2 ADR | Lade AKKU B mit M2 | 3 |
| | STAA | STP3A | Speichere M1 von AKKU A nach PLA 6 AKKU A | 5 |
| | STAB | STP3B | Speichere M2 von AKKU B nach PLA 6 AKKU B | 5 |
| | STAA*) | DPOS | Wählt Datensammelltg. nach peripherem Ausgangsmakrobefehl | 4 |
| | STAA*) | INCMPS | Wählt INC, CMP und ADR-Ausg.-Makrobefehl | 4 |
| | STAA*) | DMAR | Gibt eine DMA-Anforderung heraus | 4 |
| Exit | RIT | | Rückkehr aus Unterbrechung | 10 |

*) Der Inhalt des Akkumulators A hat keine Wirkung auf die Auswahl von Makrobefehlen in den programmierbaren Logikanordnungen (PLA) 5 und 6, da die Makrobefehlsspalten, die der Dateneingangssammelleitung entsprechen alle als »bel ebig« codiert sind.

Wenn die Tastatur einen Datentransfer signalisiert, startet der Prozessor, um eine Unterbrechungsroutine zu bedienen. Hierzu werden zuerst die Adressen M1 und M2 in die Akkumulatoren A und B der PLA 6, die in Fig. 7 dargestellt ist, geladen. Als zweites wird die Datensammelleitung zu dem peripheren Ausgangsmakrobefehl (DBPO) in der ODER-Anordnung 56 der in Fig. 5 dargestellten PLA 5 und dann die INC, CMP und Adressenausgangsmakrobefehle (INCMP) in der ODER-Anordnung 72 in der in Fig. 7 dargestellten PLA 6 ausgewählt. Der DBPO-Makrobefehl stellt einen Verbindungspfad für die Übertragung von Speicherdaten von der Sammelleitung 3 zu dem peripheren Ausgang 33 (CRT) in Fig. 5 her. Der INCMP-Makrobefehl ist funktionell die Kombination eines Zählers, eines Vergleichers und einer Übertragungsstrecke von Daten von dem PLA 6-Akkumulator A zu dem Adressensammelleitungsausgang 62 in Fig. 7. Wenn ein Makrobefehl ausgeführt wird, nachdem das BA-Signal (DMA gewährt) auf der Leitung 63 einen hohen Pegelwert annimmt, dann läuft der Zähler von M1 an bis M2 und stoppt dort. In der Zwischenzeit werden eine ganze Reihe von Speicheradressen erzeugt. Mit diesen werden dann die Daten abgerufen und vom Hauptspeicher zum Datensichtgerät CRT über den DBPO-Verbindungsweg in der PLA 5 übertragen.

Da das $\overline{\text{Halt}}$-Signal (DMA-Anforderung) auf der Leitung 23 in Fig. 7 möglicherweise asynchron bezüglich der gegenwärtig ausgeführten Instruktion sein kann, führt dieses zu einer variablen Zeitverzögerung von dem im Pegel abfallenden Signal bis zum ansteigenden Signal BA (DMA gewährt) auf Leitung 63 in Fig. 7. Die maximale Zeitverzögerung tritt allerdings auf, wenn die $\overline{\text{Halt}}$-Leitung 23 im ersten Zyklus einer langen Instruktion einen niedrigen Pegelwert annimmt, wobei eine derartige lange Instruktion eine programmierte Unterbrechung (SWI) sein kann, die 12 Zyklen lang ist. Zu diesen 12 Zyklen, die für die vollständige Durchführung dieser Instruktion SWI erforderlich sind, wird ein Zyklus hinzugefügt, der für die Adresse des Mikroprozessors 7, die Daten und R/W-Signale, für die Einstellung auf einen hohen Pegelwert erforderlich ist. Diese Verzögerung muß beim Ablauf von DMA-Transfers berücksichtigt werden.

**Patentansprüche**

1. Einrichtung zur Erweiterung des Standard-Makroinstruktionssatzes in einer Datenverarbeitungsanlage, die über ein Sammelleitungssystem für Daten, Adressen und Steuerinformation verfügt, welches einen Prozessor und die übrigen Systemkomponenten, wie Speicher und periphere Geräte miteinander verbindet, gekennzeichnet durch mindestens eine Mikroinstruktionen enthaltende programmierbare Logikanordnung (PLA 4, 5, 6; Fig. 1), die an das Sammelleitungssystem (1, 2, 3) angeschlossen ist und über die Adressensammelleitung (2) vom Prozessor (7) Adreßinformation empfängt, wobei jede angeschlossene programmierbare Logikanordnung auf eine bestimmte ihr zugeordnete Adresse anspricht und diese als eine Makroinstruktion außerhalb des Standard-Makroinstruktionssatzes interpretiert, indem die über die bestimmte Adresse angesteuerte programmierbare Logikanordnung die Adresse in eine Folge von Mikroinstruktionen auflöst, die einer gewünschten Zusatzfunktion entspricht und deren Ausführung ein Verarbeitungsergebnis liefert.

2. Einrichtung nach Anspruch 1, dadurch gekennzeichnet, daß das von der programmierbaren Logikanordnung (PLA 4, 5, 6; Fig. 1) erzeugte Verarbeitungsergebnis auf die Datensammelleitung (3) übertragen wird.

3. Einrichtung nach Anspruch 1, dadurch gekennzeichnet, daß das von einer programmierbaren Logikanordnung (PLA 4, 5, 6; Fig. 1) erzeugte Verarbeitungsergebnis auf die Steuersammelleitung (1) übertragen wird.

4. Einrichtung nach einem oder mehreren der Ansprüche 1 bis 3, dadurch gekennzeichnet, daß ein peripheres Gerät (10) an eine programmierbare Logikanordnung (z. B. PLA 5) angeschlossen wird.

5. Einrichtung nach Anspruch 4, dadurch gekennzeichnt, daß das Verarbeitungsergebnis einer adressierten programmierbaren Logikanordnung (PLA 5; Fig. 1) auch an ein peripheres Gerät (10) übertragbar ist.

**Claims**

1. Device for extending the standard macroinstruction set in a data processing system comprising a bus system for data, address and control information interconnecting a processor and the remaining system components as storage and peripheral equipment, characterized by at least one programmable logic array (PLA 4, 5, 6; Fig. 1) containing microinstructions, which is connected to the bus system (1, 2, 3) and receives address data from the processor (7) via the address bus (2), each connected programmable logic array responding to a predetermined address associated thereto and interpreting the latter as a macroinstruction outside the standard set of macroinstructions in that the programmable logic array reacts on its predetermined address by resolving the address into a sequence of microinstructions which corresponds to a respective additional function and whose execution produces a processing result.

2. Apparatus as claimed in claim 1, characterized in that the processing result produced by the programmable logic array (PLA 4, 5, 6; Fig. 1) is transferred to the data bus (3).

3. Apparatus as claimed in claim 1, characterized in that the processing result produced by a programmable logic array (PLA 4, 5, 6; Fig. 1) is transferred to the control bus (1).

4. Apparatus as claimed in one or several of claims 1 to 3, characterized in that a peripheral device (10) is connected to a programmable logic array (e. g. PLA 5).

5. Apparatus as claimed in claim 4, characterized in that the processing result of an addressed programmable logic array (PLA 5; Fig. 1) can also be transferred to a peripheral device (10).

**Revendication**

1. Dispositif pour étendre le jeu normal de macroinstructions dans une installation de traitement d'informations qui dispose d'un système de bus communs pour les données, les adresses et l'information de commande, qui relie en entre eux un processeur et les autres composants du système, tels que des mémoires et des appareils périphériques, caractérisé par au moins un dispositif logique programmable (PLA 4, 5, 6; figure 1) contenant une macro-instruction et qui est raccordé au système de bus communs (1, 2, 3) et reçoit du processeur (7) une information d'adresse par l'intermédiaire du bus commun d'adresses (2), chaque dispositif logique programmable raccordé répondant á une adresse déterminée qui lui est associée et interprétant cette adresse sous la forme d'une macro-instruction en dehors du jeu normal de macro-instructions, de telle sorte que le dispositif logique programmable commandé par l'intermédiaire de l'adresse déterminée définit l'adresse dans une suite de micro-instructions qui correspond à une fonction supplémentaire désirée et dont l'exécution fournit un résultat de traitement.

2. Dispositif selon la revendication 1, caractérisé en ce que ledit résultat de traitement délivré par ledit dispositif logique programmable est transmis au bus commun de données (3).

3. Dispositif selon la revendication 1, caractérisé en ce que le résultat de traitement délivré par un des dispositifs logiques programmables (PLA 4, 5, 6; Figure 1) est transmis au bus commun de commande (1).

4. Dispositif selon une ou plusieurs des revendications 1 à 3, caractérisé en ce qu'un appareil périphérique est raccordé à un dispositif logique programmable (PLA 5, par exemple).

5. Dispositif selon la revendication 4, caractérisé en ce que le résultat de traitement d'un dispositif logique programmable (PLA 5; figure 1) peut aussi être transmis à un appareil périphérique (10).

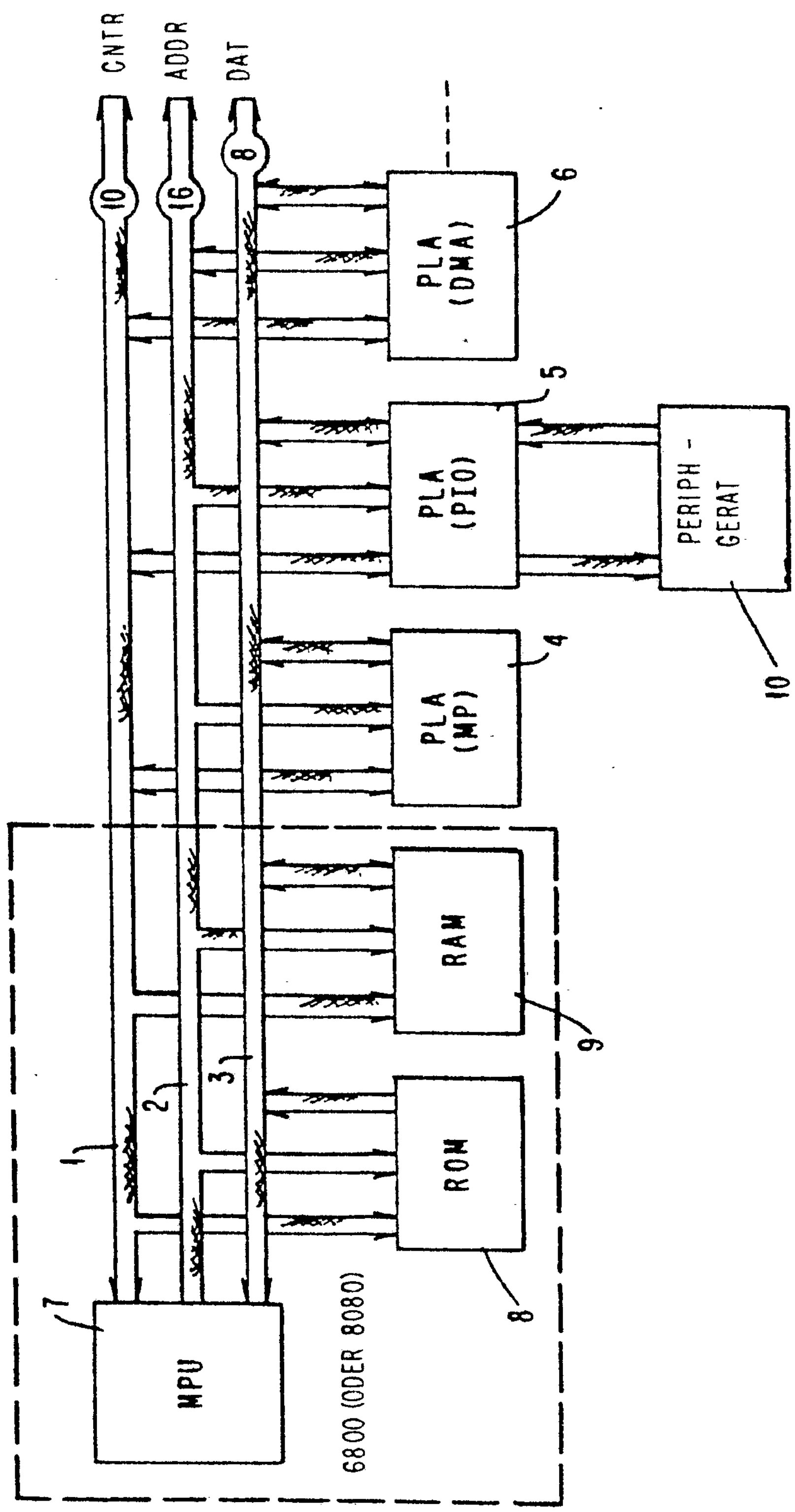
CNTR
ADDR
DAT
10
16
8
PLA (DMA)
PLA (PIO)
PLA (MP)
PERIPH - GERAT
RAM
ROM
MPU
6800 (ODER 8080)
1
2
3
4
5
6
7
8
9
10

FIG. 1

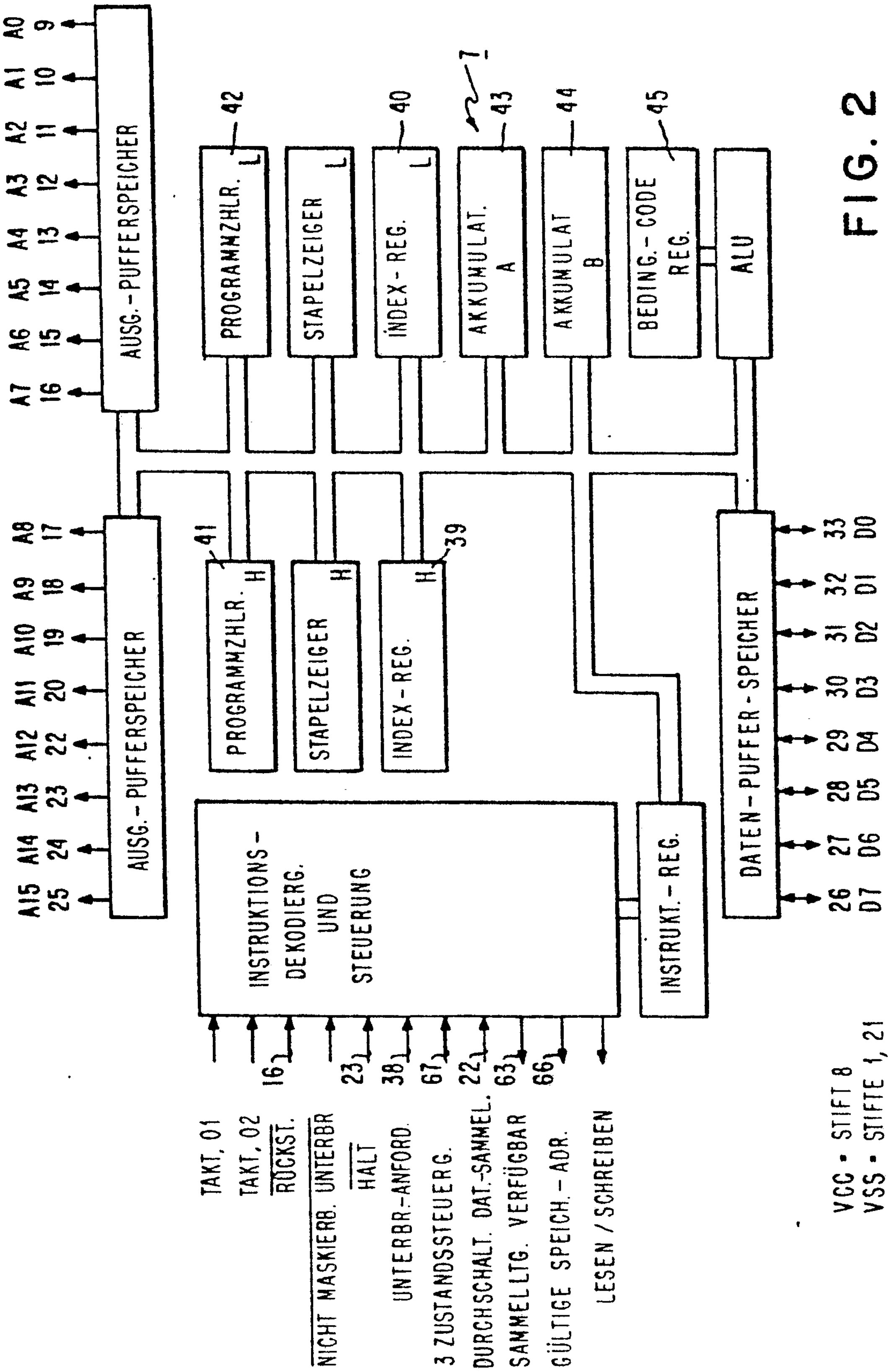

AUSG.-PUFFERSPEICHER
AUSG.-PUFFERSPEICHER
A0 9
A1 10
A2 11
A3 12
A4 13
A5 14
A6 15
A7 16
A8 17
A9 18
A10 19
A11 20
A12 22
A13 23
A14 24
A15 25
PROGRAMMZHLR. L
STAPELZEIGER L
INDEX-REG. L
AKKUMULAT. A
AKKUMULAT B
BEDING.-CODE REG.
ALU
42
40
43
44
45
1
PROGRAMMZHLR. H
STAPELZEIGER H
INDEX-REG. H
41
39
DATEN-PUFFER-SPEICHER
33 D0
32 D1
31 D2
30 D3
29 D4
28 D5
27 D6
26 D7
INSTRUKTIONS-DEKODIERG. UND STEUERUNG
INSTRUKT.-REG.
TAKT, 01
TAKT, 02
RÜCKST. 16
NICHT MASKIERB. UNTERBR
HALT 23
UNTERBR.-ANFORD. 38
3 ZUSTANDSSTEUERG. 67
DURCHSCHALT. DAT.-SAMMEL. 22
SAMMELLTG. VERFÜGBAR 63
GÜLTIGE SPEICH.-ADR. 66
LESEN / SCHREIBEN
VCC • STIFT 8
VSS • STIFTE 1, 21


FIG. 2

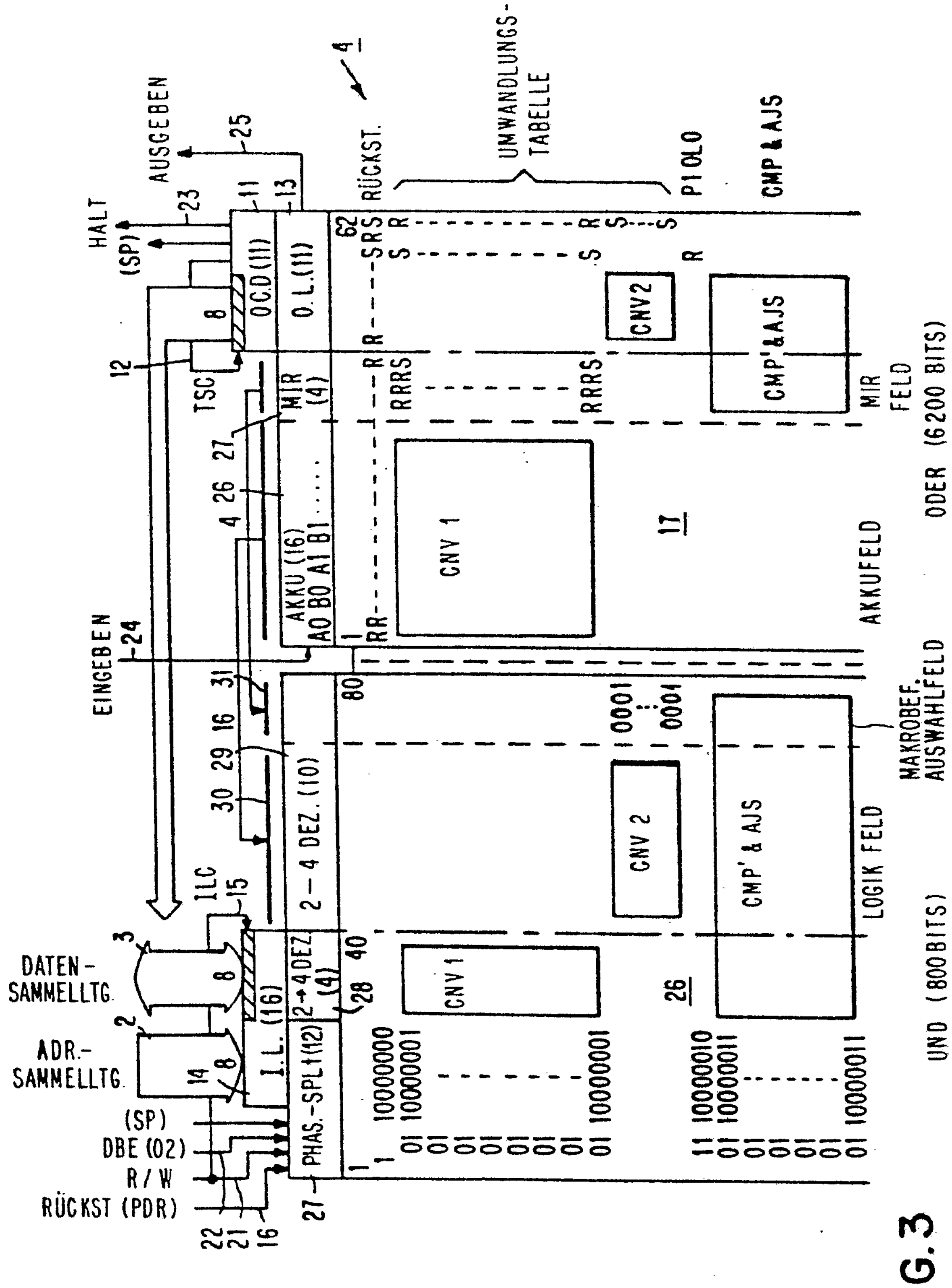
DATEN-SAMMELLTG.
ADR.-SAMMELLTG.
(SP)
DBE (02)
R/W
RÜCKST (PDR)
HALT (SP)
AUSGEBEN
EINGEBEN
RÜCKST.
UMWANDLUNGS-TABELLE
P1 OLO
CMP & AJS
OC.D (11)
O.L. (11)
MIR (4)
AKKU (16) A0 B0 A1 B1 .....
2 – 4 DEZ. (10)
I.L. (16)
PHAS.-SPL1 (12)
2→4 DEZ (4)
TSC
ILC
CNV 1
CNV 2
CMP' & AJS
AKKUFELD
MIR FELD
ODER (6200 BITS)
UND (800 BITS)
LOGIK FELD
MAKROBEF. AUSWAHLFELD

FIG. 3

| ADRESSE 15 | 14 | 13 | 12 | 11 | 10 | 9 | 8 | 7 | 6 | 5 | 4 | 3 | 2 | 1 | 0 | SYSTEM KOMPONENTE | SPEICH.- BELEG (HEX) | ZAHL DER ADRESSEN |
|---|---|---|---|---|---|---|---|---|---|---|---|---|---|---|---|---|---|---|
| 0 | 0 | • | • | • | • | • | • | • | X | X | X | X | X | X | X | RAM 9 | 0000 – 007F | 128 |
| 1 | 1 | • | • | • | • | X | X | X | X | X | X | X | X | X | X | ROM 8 | 0000 – 03FF | 1,024 |
| 0 | 1 | • | • | • | • | • | • | • | • | • | • | • | 1 | X | X | PIA | 4004 – 4007 | 4 |
| 0 | 1 | • | • | • | • | • | • | • | • | • | • | 1 | • | • | X | ACIA | 4008 – 4009 | 2 |
| 1 | 0 | • | • | • | • | • | • | • | • | X | X | X | X | X | X | PLA4 | 8000 – 803F | 64 |

X = VARIABLE ADRESSE
• = OHNE BEDEUTUNG

FIG. 4

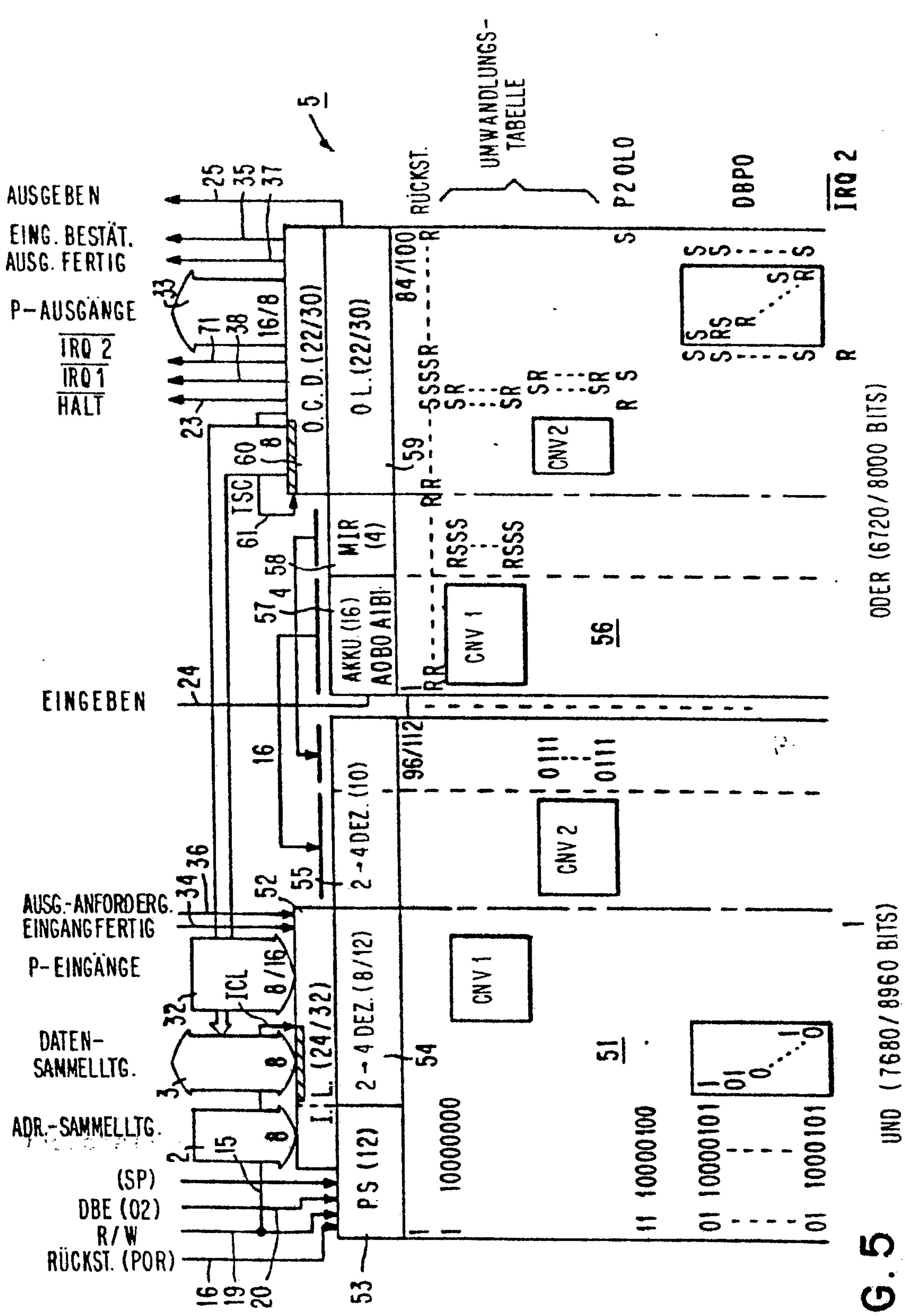

AUSGEBEN
EING. BESTÄT.
AUSG. FERTIG
P-AUSGÄNGE
IRQ 2
IRQ 1
HALT
EINGEBEN
AUSG.-ANFORDERG.
EINGANGFERTIG
P-EINGÄNGE
DATEN-SAMMELLTG.
ADR.-SAMMELLTG.
(SP)
DBE (02)
R/W
RÜCKST. (POR)
O.C.D. (22/30)
O L. (22/30)
MIR (4)
AKKU (16) AOBO A1B1
2→4 DEZ. (10)
2→4 DEZ. (8/12)
I.L. (24/32)
P.S (12)
ICL
TSC
CNV 1
CNV 2
RÜCKST.
UMWANDLUNGS-TABELLE
P2 OLO
DBPO
IRQ 2
ODER (6720/8000 BITS)
UND (7680/8960 BITS)
84/100
96/112
16/8
8/16
10000000
10000100
10000101
1000101
0111


FIG. 5

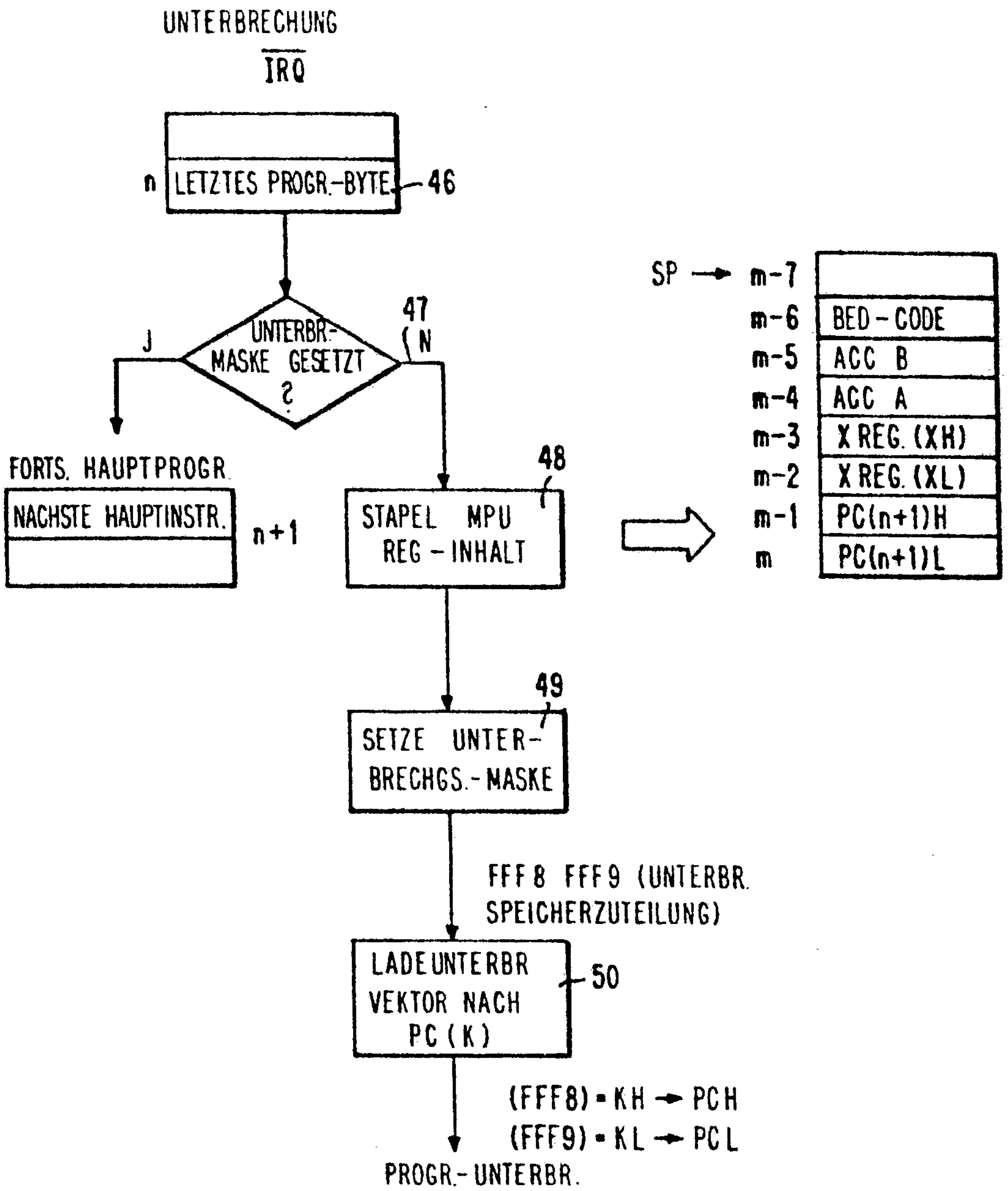
UNTERBRECHUNG
IRQ
n
LETZTES PROGR.-BYTE
46
J
UNTERBR.-MASKE GESETZT ?
47
N
FORTS. HAUPTPROGR.
NÄCHSTE HAUPTINSTR.
n+1
48
STAPEL MPU REG - INHALT
SP → m-7
m-6 BED - CODE
m-5 ACC B
m-4 ACC A
m-3 X REG. (XH)
m-2 X REG. (XL)
m-1 PC(n+1)H
m PC(n+1)L
49
SETZE UNTER-BRECHGS.-MASKE
FFF8 FFF9 (UNTERBR. SPEICHERZUTEILUNG)
LADE UNTERBR VEKTOR NACH PC (K)
50
(FFF8) = KH → PCH
(FFF9) = KL → PCL
PROGR.- UNTERBR.

FIG. 6

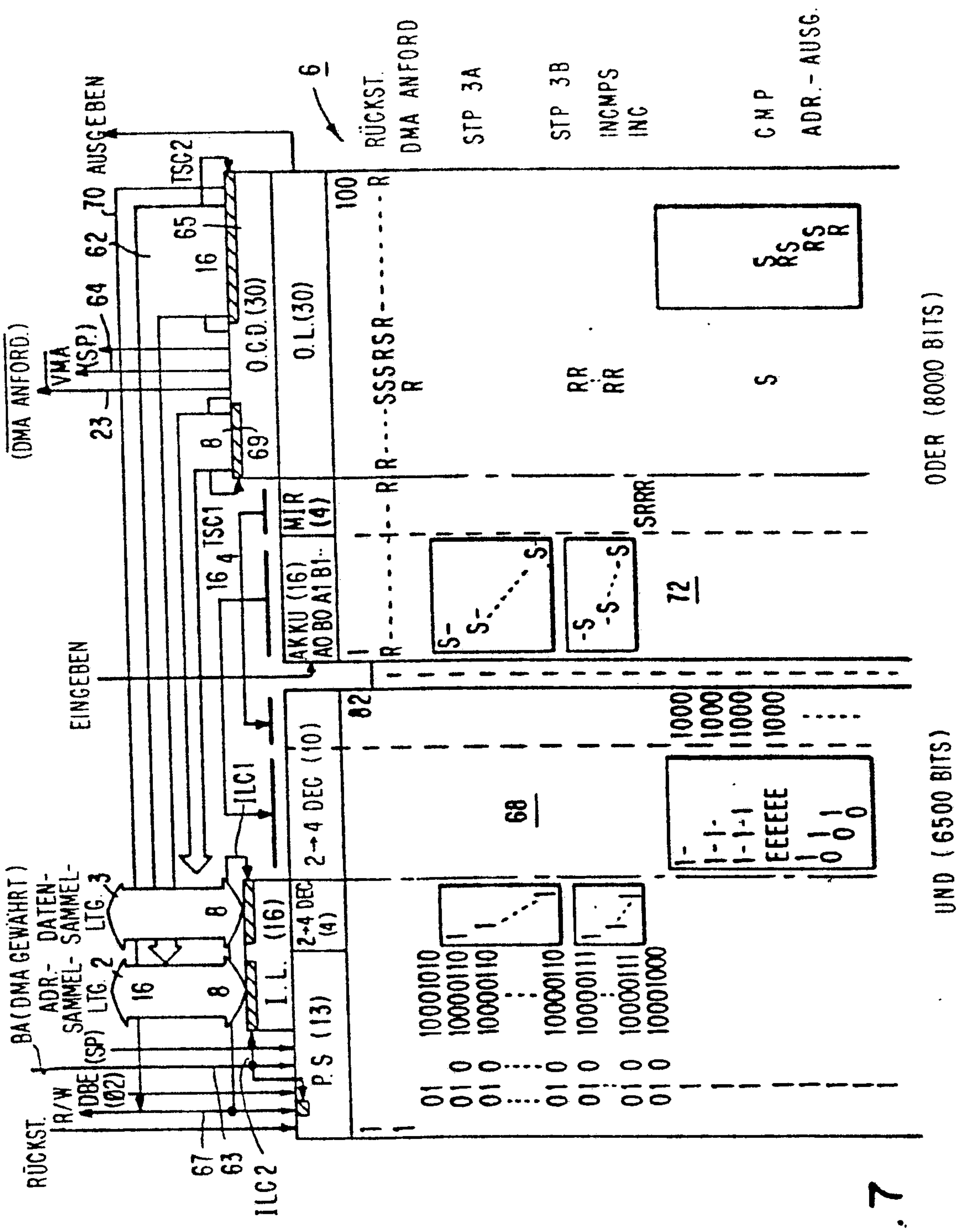

HALT
(DMA ANFORD.)
VMA
(SP.)
23
64
62
70
AUSGEBEN
TSC2
65
16
O.C.D.(30)
O.L.(30)
8
69
6
100
RÜCKST.
DMA ANFORD
STP 3A
STP 3B
INCMPS
INC
CMP
ADR.- AUSG.
MIR
(4)
TSC1
AKKU (16)
A0 B0 A1 B1
EINGEBEN
72
82
ILC1
2→4 DEC (10)
68
ODER (8000 BITS)
UND (6500 BITS)
BA (DMA GEWÄHRT)
ADR.-
SAMMEL-
LTG. 2
DATEN-
SAMMEL-
LTG. 3
RÜCKST.
R/W
ADBE
(SP)
(Ø2)
P.S (13)
I.L. (16)
2→4 DEC (4)
67
63
ILC2


FIG. 7

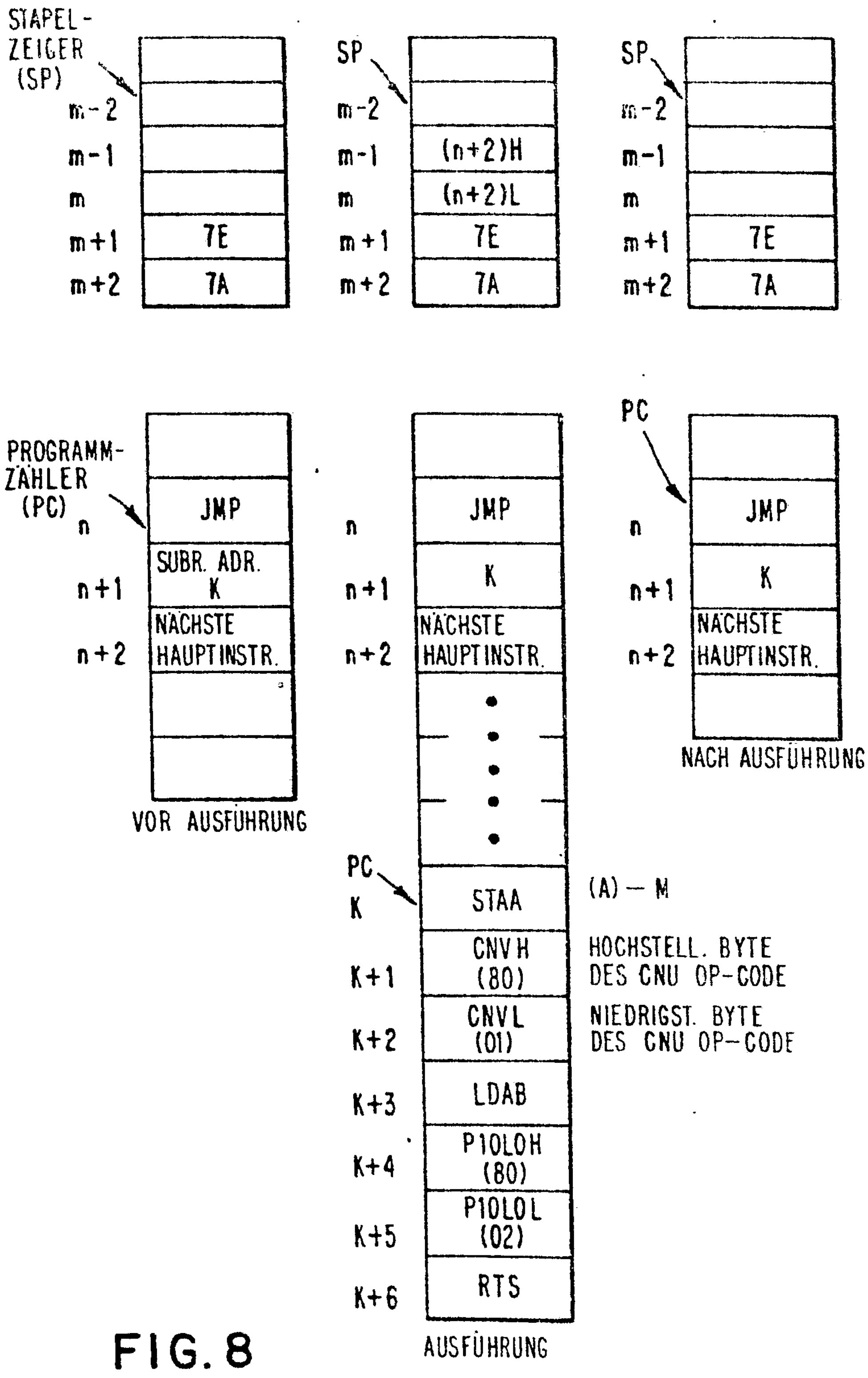
STAPEL-
ZEIGER
(SP)
m-2
m-1
m
m+1
m+2
7E
7A
SP
(n+2)H
(n+2)L
PROGRAMM-
ZÄHLER
(PC)
n
n+1
n+2
JMP
SUBR. ADR.
K
NÄCHSTE
HAUPTINSTR.
VOR AUSFÜHRUNG
PC
K
STAA
(A) — M
K+1
CNVH
(80)
HOCHSTELL. BYTE
DES CNU OP-CODE
K+2
CNVL
(01)
NIEDRIGST. BYTE
DES CNU OP-CODE
K+3
LDAB
K+4
P1OLOH
(80)
K+5
P1OLOL
(02)
K+6
RTS
AUSFÜHRUNG
NACH AUSFÜHRUNG

FIG. 8

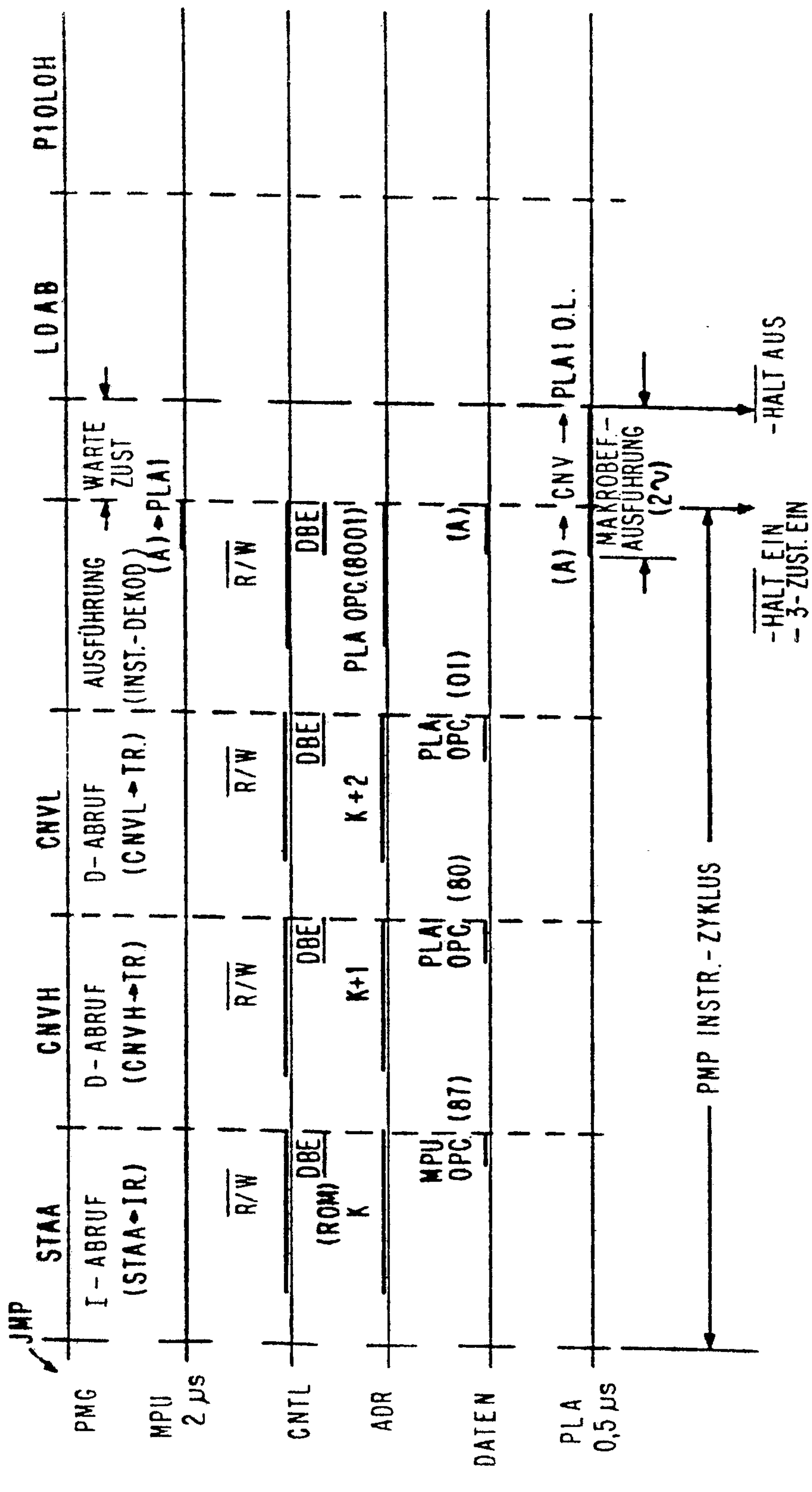
PMG
MPU 2 µs
CNTL
ADR
DATEN
PLA 0,5 µs
JMP
STAA
CNVH
CNVL
LDAB
P10LOH
I - ABRUF (STAA→IR)
D - ABRUF (CNVH→TR.)
D - ABRUF (CNVL→TR.)
AUSFÜHRUNG (INST.-DEKOD.)
(A)→PLA1
WARTE ZUST
R/W
DBE
(ROM) K
K+1
K+2
PLA OPC (8001)
MPU OPC (87)
PLA OPC (80)
PLA OPC (01)
(A)
(A) → CNV → PLA1 O.L.
MAKROBEF.-AUSFÜHRUNG (2~)
PMP INSTR.-ZYKLUS
-HALT EIN
- 3-ZUST. EIN
-HALT AUS

FIG.9A

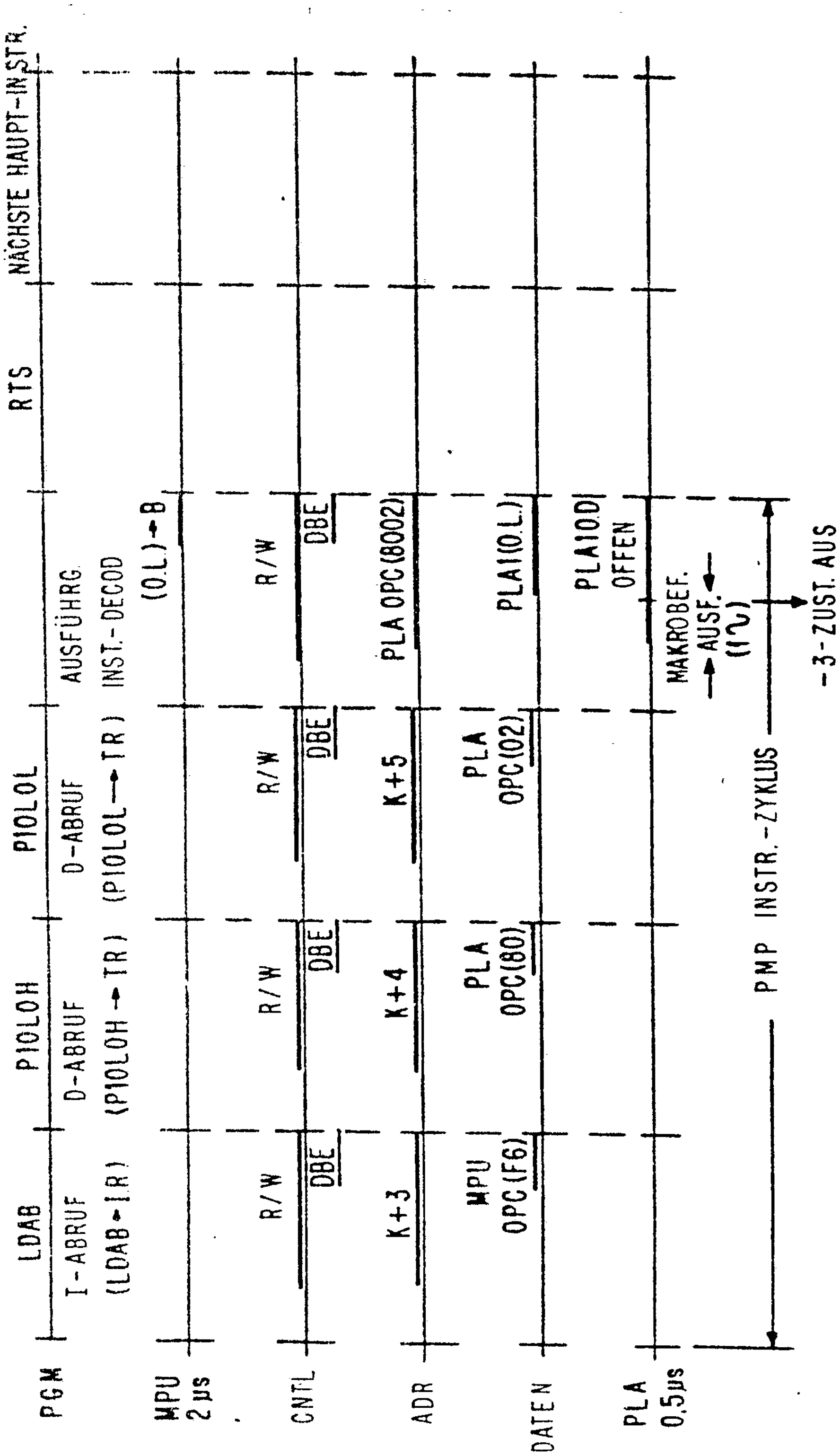

PGM
MPU 2 µs
CNTL
ADR
DATEN
PLA 0,5µs
LDAB
I-ABRUF
(LDAB→I.R.)
P1OLOH
D-ABRUF
(P1OLOH → TR)
P1OLOL
D-ABRUF
(P1OLOL → TR)
AUSFÜHRG.
INST.-DECOD
(O.L.) → B
RTS
NÄCHSTE HAUPT-INSTR.
R/W
DBE
K+3
K+4
K+5
MPU OPC (F6)
PLA OPC (80)
PLA OPC (02)
PLA OPC (8002)
PLA1(O.L.)
PLA1O.D OFFEN
MAKROBEF. → AUSF. ←
-3-ZUST. AUS
PMP INSTR.-ZYKLUS


FIG. 9B

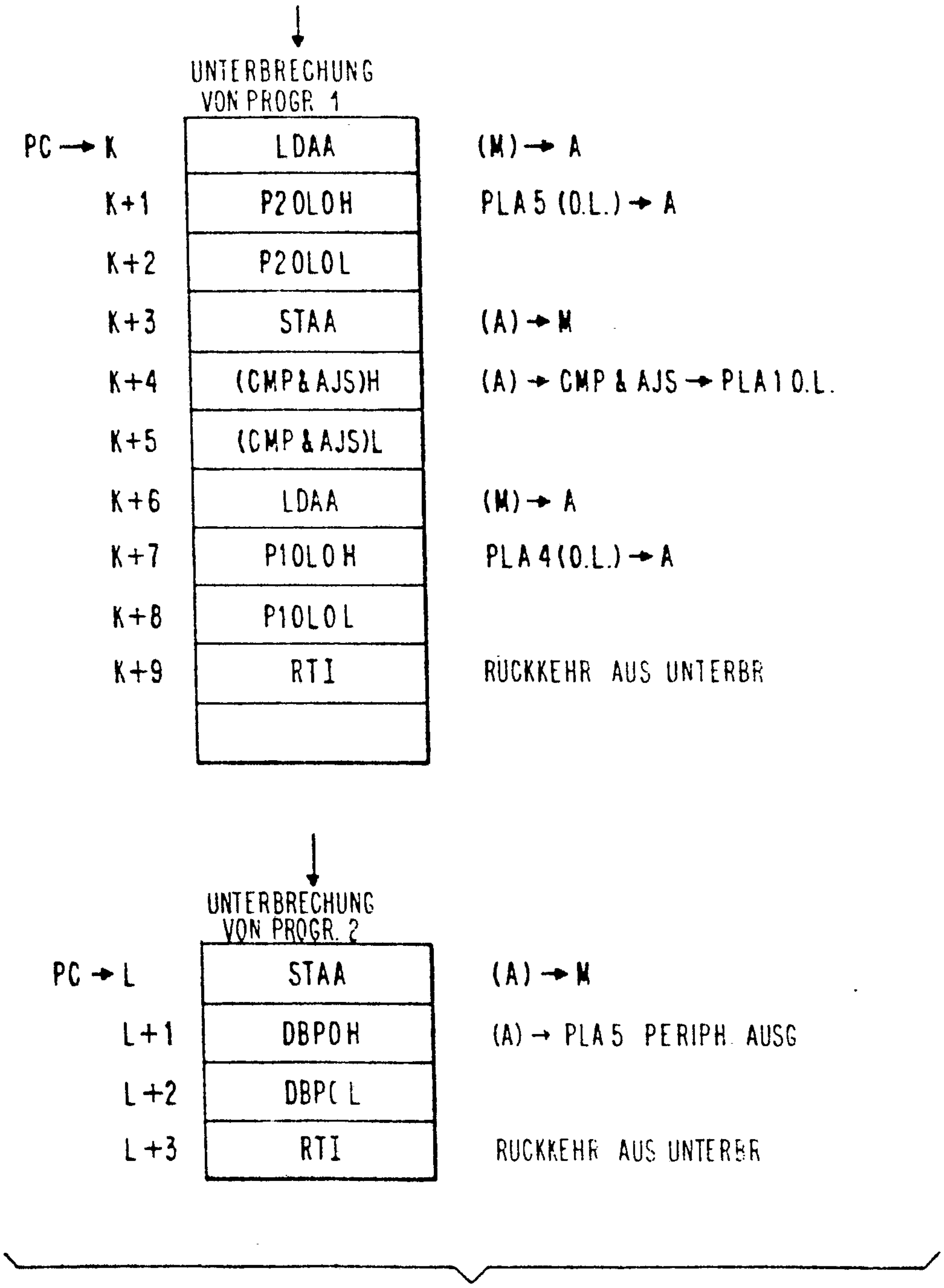
UNTERBRECHUNG
VON PROGR. 1
PC → K
LDAA
(M) → A
K+1
P2OLOH
PLA 5 (O.L.) → A
K+2
P2OLOL
K+3
STAA
(A) → M
K+4
(CMP & AJS)H
(A) → CMP & AJS → PLA 1 O.L.
K+5
(CMP & AJS)L
K+6
LDAA
(M) → A
K+7
P1OLOH
PLA 4 (O.L.) → A
K+8
P1OLOL
K+9
RTI
RÜCKKEHR AUS UNTERBR
UNTERBRECHUNG
VON PROGR. 2
PC → L
STAA
(A) → M
L+1
DBPOH
(A) → PLA 5 PERIPH. AUSG
L+2
DBPOL
L+3
RTI
RUCKKEHR AUS UNTERBR

FIG. 10

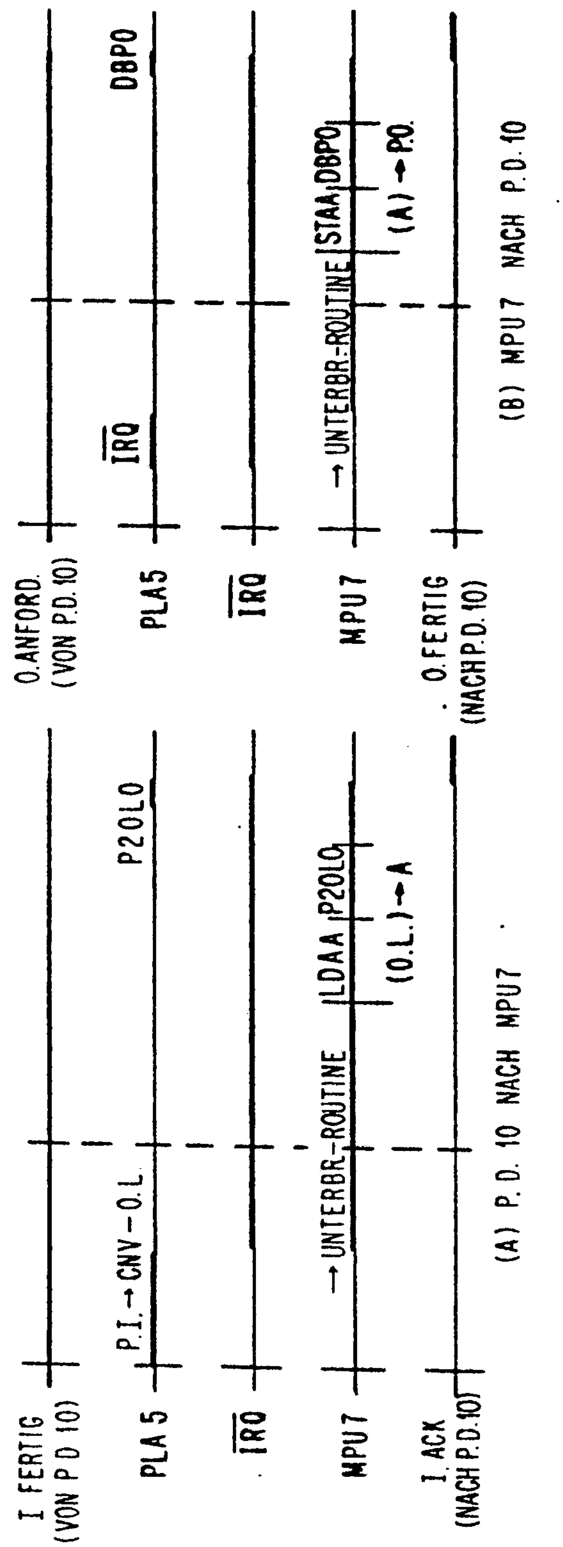
I FERTIG (VON P.D 10)
PLA 5
IRQ
MPU 7
I. ACK (NACH P.D.10)
P.I. → CNV − O.L.
→ UNTERBR.-ROUTINE
LDAA P2OLO
(O.L.) → A
P2OLO
(A) P.D. 10 NACH MPU7
O.ANFORD. (VON P.D.10)
PLA5
IRQ
MPU 7
O.FERTIG (NACH P.D.10)
IRQ
→ UNTERBR.-ROUTINE
STAA DBPO
(A) → P.O.
DBPO
(B) MPU 7 NACH P.D.10

FIG.11

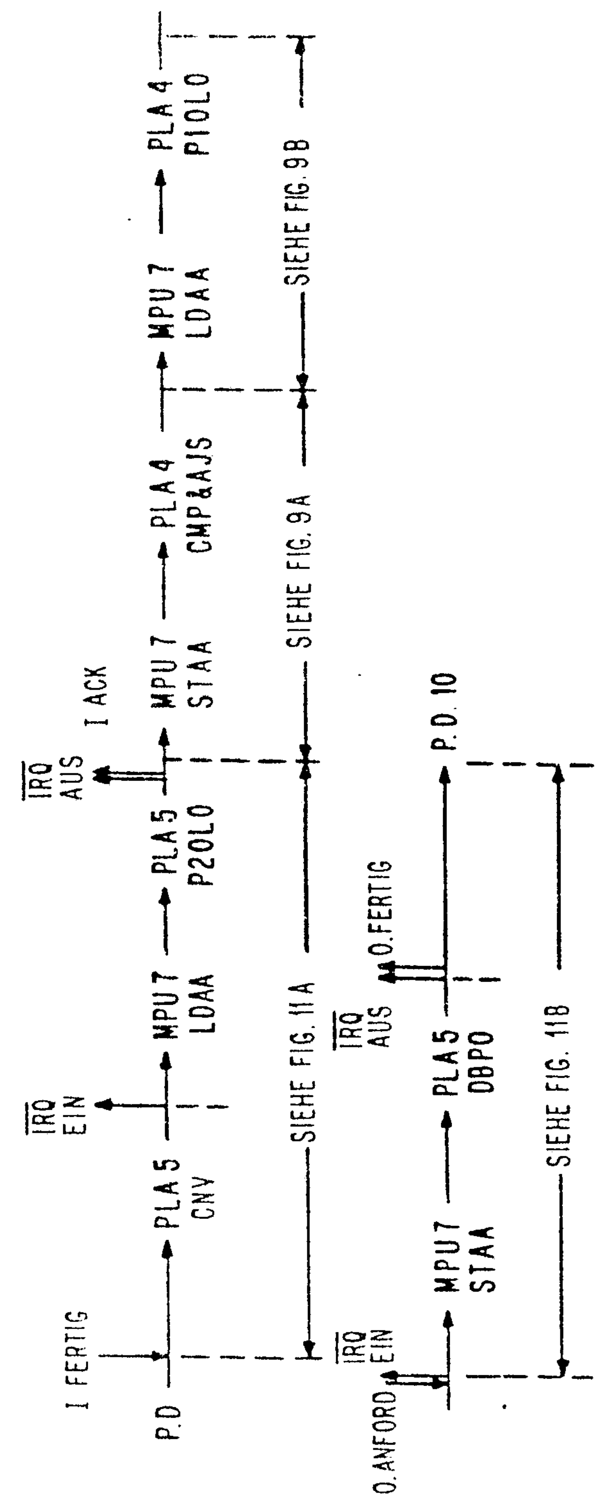
P.D
I FERTIG
PLA 5
CNV
IRQ
EIN
MPU 7
LDAA
PLA 5
P20LO
IRQ
AUS
I ACK
MPU 7
STAA
PLA 4
CMP&AJS
MPU 7
LDAA
PLA 4
P1OLO
SIEHE FIG. 11 A
SIEHE FIG. 9A
SIEHE FIG. 9B
O.ANFORD
IRQ
EIN
MPU 7
STAA
PLA 5
DBPO
IRQ
AUS
O.FERTIG
P.D. 10
SIEHE FIG. 11B

FIG. 12